# EUROPEAN PATENT APPLICATION

(11) **EP 0 708 282 A1**
(43) Date of publication of application: **24.04.1996**
(21) Application number: 95115406.1
(22) Date of filing: 29.09.1995
(51) Int. Cl.: F16K 11/00, F16K 31/68, G05D 23/13

(54) **Improvements to hot and cold water thermostatic mixers**

(30) Priority: 13.10.1994 IT MI940687 U
(71) Applicant: STILE RUBINETTERIE di ROSSI G., I-28024 Gozzano (NO) (IT)
(72) Inventor: Fila, Paolo, I-13059 Trivero (Biella) (IT)
(74) Representative: de Pasquale, Carlo

(57) **Abstract**

A hot and cold water thermostatic mixer comprising a main body (1) which contains the various parts of the device; a on-off valve (2) which, through its movements, regulates the flow of hot and cold water; a thermostatic probe, generally constructed of a container made of a heat-expanding substance (6) which, through its stem (14) determines the movements of the on-off valve, the head of said stem being controllable by means of a screw regulator (7) which blocks the course of the probe (2) and, as a consequence, of the on-off valve (2) at the temperature-mix desired; two closing plugs, lower (8) and upper (5), the latter containing the parts constituting the regulator. Some parts of the thermostatic device, in particular those in direct contact with the water, that is, the main body (1), the on-off valve (2), the upper plug (5) and the lower plug (8), are constructed using a polymer or a technopolymer pertaining to the Polysulfonyl family (PSU) (structurally amorphous polymers).

## Description

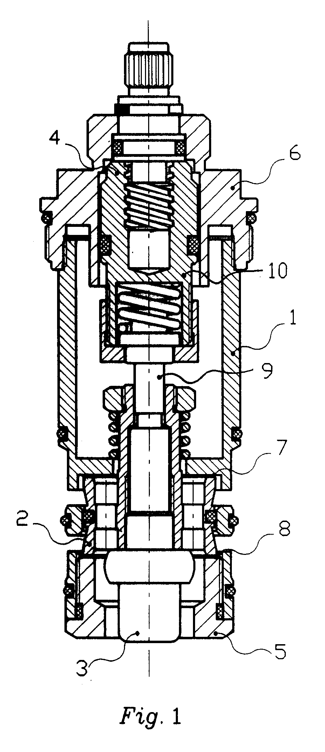

Hot and cold water thermostatic mixer valves are known to the art in the field of taps and fittings thereof. They are mainly constituted of (see figure 1): a main body 1 which contains the various parts of the device; a on-off valve 2 which, through its movements, regulates the flow of hot and cold water; a thermostatic probe 3, generally constructed of a container made of a heat-expanding substance which, through its stem 9 determines the movements of the on-off valve 2, the head of said stem 9 being controllable by means of a screw regulator 10 which blocks the course of the probe 3 and, as a consequence, of the on-off valve 2 at the temperature-mix desired; two closing plugs, lower 5 and upper 6, the latter containing the parts constituting the regulator 10.

The on-off valve 2 is perforated throughout and moves a few tenths of a millimetre, the upper face 7 in the direction of the main body 1, and the lower face 8, in the direction of the upper face of the lower plug 5, these two openings being those which determine the flow of the two hot and cold fluids to be mixed.

This device is then inserted into a jacket which is endowed with two openings for the entry of both hot and cold water and a third for the exit of the mixed water.

At present, these valves are made of metal (generally brass) or similar materials but have the disadvantage in that the on-off valve becomes coated with calcareous deposits (furring). In particular, the deposits which cause most problems are those which develop on the on-off valve faces 7 and 8, through which the liquids to be mixed pass. Given the very limited amount of space to be covered by the on-off valve passing from one extreme position to the other, very small deposits of calcareous materials deposited on one or both of its faces (especially that which comes into contact with hot water), are sufficient to considerably alter performance with regard to the setting of the apparatus.

There are those who have attempted to overcome this problem by plasticating the external walls of the on-off valve, but this exercise has not resulted in any kind of beneficial effect as, following furring, the parts which mostly interfere with regulation are not the external walls of the on-off valve, but rather the two faces 7 and 8, more specifically, the two flat upper and lower circumferences which, because of their extremely limited surface area, are not adapted to plastication.
- A first embodiment of the present invention is to achieve the elimination of the above mentioned defect, that is, the formation of calcareous deposits on the on-off valve;
- A second embodiment of the invention is to simplify the construction of the device, thereby doing away with long and costly production methods;
- A third embodiment, which from the technical point of view appears to be the most important, is to obtain a product which has considerably lower thermal inertia and, as a consequence, improved performance in the reduction of the time necessary for the device to reach the pre-fixed temperature of the mixture, as well as the time required by the device for the automatic shutting-off of the hot water supply where the flow of cold water is unexpectedly and suddenly interrupted.

Overcoming a widespread and commonly held view with regard to the technology and following a long series of tests and experimentation, mostly unsuccessful, which seemed to confirm the truth of the prejudiced view with regard to said technology, it has finally been found that it is possible to produce a thermostatic mixer valve, possessing the same functions known to the art, but with the improvements that had been aimed at, by constructing a certain number of its components, especially those that come into direct contact with the hot and cold water, with a thermoplastic material.

To this purpose, it was finally found that polymers or technopolymers pertaining to the Polysulfonyl family (PSU) (structurally amorphous polymers) could be employed, thereby obtaining a product with mechanical properties decidedly superior to those of similar thermoplastics and possessing the prerequisites necessary for the successful performance of the device in question, at the same time possessing optimum sealing qualities at low temperatures as well as being able to resist much higher working temperatures those to be found in a hot-water mixer, said two conditions also allowing for good dimensional stability and with a low absorption expansion coefficient.

The invention will be better understood in giving, by way of an example, its realization, which does not in any way limit the scope of the invention itself, as shown in the drawing which comprises:

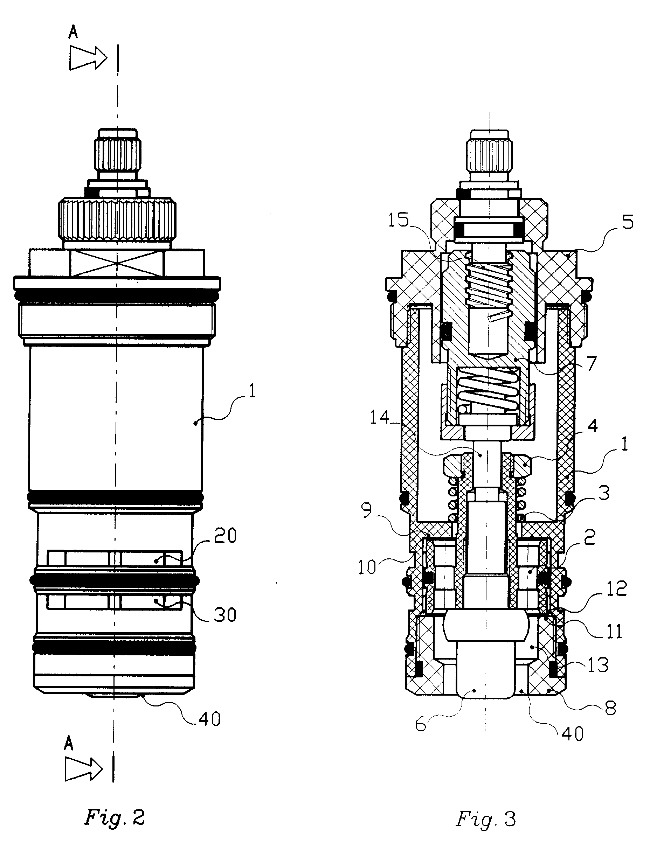

- figure 2 -: a valve according to the invention seen from the angle of the input orifices of the hot and cold water;
- figure 3 -: a section according to A A of figure 2.

The valve according to the invention is structured exactly as those made of metal illustrated in figure 1, except that many of the parts are constructed with the polymer as mentioned above, as follows:
the main body 1;
the on-off valve 2;
the upper plug 5;
the lower plug 8.

Parts which are still made of metal (generally brass) are:
the thermostatic valve 6; the exit-temperature regulation complex 7; the spring 3, which is, however, plasticated externally; the nut 4, in that it has to oppose the pressure of the spring.

The function, as is the case in all of those valves of this type made of metal, is as follows:
on opening the tap, positioned downstream to the exit 40 of the thermostatic valve 6, hot and cold water are allowed to enter the device: the cold water through the orifices 20, which, passing through the interior of the on-off valve between the base 9 of the main body and the upper face 10 of the on-off valve 2, gains entry to the interior of the on-off valve and is mixed with the hot water which enters through the orifices 30 by passing between the upper face 11 of the lower plug 8 and the lower face 12 of the on-off valve.

The hot water first comes into contact with the probe 6 whose internal content, on expanding, triggers an upward movement of the stem 14 which in its turn moves the on-off valve in the same direction to the point of arrest effected by the regulator 7, thereby fixing the setting of the valve by the user according to the temperature desired.

Both the hot and the cold water are mixed in the chamber 13 thereby maintaining the probe 6 at the desired temperature desired, the mixed water leaving the orifice 40 at the pre-fixed temperature.

By turning the large screw 15 of the regulator 7 one way or the other, it is possible to displace the probe in one direction or the other and, as a consequence, also the on-off valve, thereby reducing or increasing the temperature of the mixed water.

According to the invention, with the realization of the hot and cold water mixer, the goals previously set were met, as follows:
- a device was obtained wherein the surfaces of the main body 1 and the on-off valve 2 are highly-polished, having been obtained through injection;
- the intrinsic characteristics of the material (thermoplastic), eliminate the deposit of calcareous material on the main body 1 and the on-off valve, particularly on the faces 10 and 12 of the same, therefore, during use in the presence of very hard water, the risk of blockage of the on-off valve is eliminated in the first place and, in the second instance, the calibration of the setting operation of the device will be not altered;
- the material is classified as "alimentary";
- the response time (the time it takes for pre-determined mixture to form) in the devices having metal parts is 12 seconds, which is reduced to 6-7 seconds in the device constructed according to the invention;
- the automatic hot water supply cut-off time in the case of the sudden and unexpected arrest of the cold water mix - something which may occur in the case of the centralized supply of hot water - is far less and comes into action even when the device is set to temperatures of around 45-50°C, whereas in the case of metal devices, cut-off does not take place at these temperatures.

| Device setting | Cut-off time in known metal devices | Cut-off time in device according to the invention |
|---|---|---|
| 35 °C | 5 secs. | 1 sec. |
| 38 °C | 8 secs. | 2 secs. |
| 45 °C | no cut-off | 3.5 secs. |
| 50 °C | no cut-off | 5 secs. |

- the construction of the said parts to be molded drastically reduces the mechanical processing of the pieces that make up the device.

## Claims

1. A hot and cold water thermostatic mixer comprised of a main body 1 which contains the various parts of the device; a on-off valve 2 which, through its movements, regulates the flow of hot and cold water; a thermostatic probe, generally constructed of a container made of a heat-expanding substance 6 which, through its stem 14 determines the movements of the on- off valve, the head of said stem being controllable by means of a screw regulator 7 which blocks the course of the probe 3 and, as a consequence, of the on-off valve 2 at the temperature-mix desired; two closing plugs, lower 8 and upper 5, the latter containing the parts constituting the regulator characterized in that some parts of the thermostatic device, in particular those in direct contact with the water, that is, the main body 1, the on-off valve 2, the upper plug 5 and the lower plug 8, are constructed using a polymer or a technopolymer pertaining to the Polysulfonyl family (PSU) (structurally amorphous polymers).
